# DEMANDE DE BREVET EUROPEEN

(11) **EP 1 974 894 A1**
(43) Date de publication de la demande: **01.10.2008**
(21) Numéro de dépôt: 07104843.3
(22) Date de dépôt: 24.03.2007
(51) Int. Cl.: B29C 65/02

(54) **Zone de déchirure pour film en plastique**

(71) Demandeur: Aisapack Holding SA, 1896 Vouvry (CH)
(72) Inventeur: Mathieu, Stéphane, 1896 Vouvry (CH)
(74) Mandataire: Grosfillier, Philippe

(57) **Abrégé**

La présente invention concerne un film plastique (3) comprenant une zone préexistante de déchirure orientée (11,7) caractérisé par le fait que ladite zone (11,7) comprend une soudure (7) qui assemble une extrémité du film plastique (9) avec une autre extrémité du film plastique (10), ladite zone de soudure étant disposée dans l'épaisseur d'une ou plusieurs des couches soudantes du film plastique (3).

L'invention concerne également à un procédé et à un dispositif pour réaliser ledit film plastique.

## Description

### Domaine de l'invention

La présente invention concerne les films plastiques qui comportent au moins une zone de fragilité pré-existante destinée à former une zone de déchirure orientée. De tels films plastiques sont notamment utilisés dans le domaine de l'emballage lorsque l'on déchire une partie d'un récipient pour prélever son contenu.

### Etat de la technique

Dans le présent texte, par "soudage" on entend une opération par laquelle deux pièces sont assemblées, avec ou sans un matériau d'apport, en provoquant la fusion de leurs bords, de manière à obtenir un joint homogène, lisse et d'une grande résistance. Le terme "soudure" doit être compris comme constituant le résultat d'un soudage.

Aujourd'hui, les films plastiques sont utilisés dans de nombreuses applications et en particulier dans l'emballage. Les films plastiques peuvent être mono ou multicouches et peuvent être obtenus par extrusion cast, extrusion soufflage, par couchage, par lamination à chaud ou par contre-collage. Ils peuvent être imprimés ou neutres.
Un des problèmes rencontré avec les films de l'état de la technique consiste en la difficulté de les déchirer (force requise souvent élevée), tout au moins de les déchirer selon une direction prédéfinie.

Pour palier à ces défauts, différents moyens ont été développés :
***1- Au niveau du film plastique***
   - Pelabilité
      La pelabilité permet de contourner le problème de la déchirure en ouvrant un sachet par pelabilité des soudures qui sont disposées sur les bords du sachet. Cette solution présente l'inconvénient de nécessiter un film soudant particulier, plus cher que les solutions classiques. D'autre part, le produit résultant est moins résistant que dans le cas d'une vraie soudure, ce qui le rend plus fragile (au niveau de la résistance pression par exemple).
   - Films plastiques orientés
      Ces films nécessitent une fabrication spécifique qui augmente sensiblement le prix du film. Leur efficacité au niveau de l'orientation de la déchirure reste relative pour la plupart d'entre eux. Un autre inconvénient réside dans le fait que les propriétés mécaniques du film se retrouvent fortement modifiées par cette orientation : On note en général une plus grande fragilité au choc (test de chute par exemple).
   En résumé, ces changements ont un effet d'une part sur le prix du film et d'autre part sur son comportement général (souplesse, résistance des soudures, résistance au choc, ...). Ces deux aspects limitent fortement le développement de ces solutions.
***2- Au niveau du procédé de fabrication du film plastique***
   - Fragilisation par pré-découpe laser ( voir p.ex. les demandes de brevet WO 9829312 et EP 0540184).
      La pré-découpe laser permet de découper partiellement un film plastique multicouche. Sa principale limite est qu'elle nécessite une installation spécifique onéreuse. Cette technologie qui existe depuis très longtemps est peu répandue.
   - Fragilisation par pré-découpe mécanique (voir p.ex. la demande de brevet EP 1094013)
      La pré-découpe est généralement faite sur l'ensemble de l'épaisseur du film plastique ; dans ce cas le film plastique est percé. Dans le cas d'une découpe partielle dans l'épaisseur (une seule couche par exemple), l'étanchéité de la soudure devient difficile à obtenir si le film plastique soudant est découpé entièrement. Si on découpe entièrement une couche biorientée, on peut perdre sensiblement en résistance mécanique.
   - Déchirure orientée par guidage (voir p.ex. la demande de brevet WO 03045816)

Cette solution ne s'applique qu'aux films faciles à déchirer de façon à guider la déchirure.

Ces procédés engendrent cependant des surcoûts industriels liés notamment à des investissements, des étapes de procédé supplémentaires ou des pertes de productivité.

Il existe par conséquent un besoin de remédier aux problèmes de l'état de la technique exposés ci-dessus.

### Description générale de l'invention

L'objet de la présente invention concerne un film plastique comprenant une zone pré-existante de déchirure orientée. Le film plastique selon l'invention se caractérise par le fait que ladite zone est constituée d'au moins une soudure qui rend solidaires deux parties du film plastique.

Par "partie", on entend toute portion de surface du film, en général une portion de surface disposée dans l'épaisseur du film, selon une direction perpendiculaire à la surface du film. La "partie" est également la portion de surface qui est en contact avec la soudure.

De cette définition, il en résulte que si la soudure s'étend sur une profondeur F inférieure à l'épaisseur du film, la partie s'étend également sur une profondeur F.

Dans la présente invention, la soudure est avantageusement réalisée en mettant bout à bout les deux parties du film.

Selon un mode de réalisation de l'invention, le film plastique est constitué de plusieurs couches superposées. Dans ce cas, la soudure peut rendre solidaires toutes les couches ou que certaines, voire qu'une seule d'entre elles.

Dans une variante de l'invention, la soudure se situe dans une région définie par la mise en contact, p.ex. par enroulement, de deux extrémités du film plastique.

Dans une autre variante de l'invention, une fente est réalisée dans le film plastique, fente dont la profondeur est égale ou inférieure à l'épaisseur du film plastique. Une fois réalisée, la fente est refermée totalement ou partiellement par soudage.

Quel que soit le procédé utilisé, le soudage peut avoir lieu sur toute ou partie de la surface pouvant être utilisée à cet effet.
La profondeur de la soudure peut être inférieure à la profondeur de la fente, que cette dernière soit d'épaisseur équivalente à celle du film plastique ou non.

L'invention concerne par ailleurs un procédé de fabrication d'une zone pré-existante de déchirure orientée dans un film plastique caractérisé en ce que ladite zone est obtenue par la fixation de deux parties dudit film plastique au moyen d'une soudure.

Avantageusement, le procédé selon l'invention comprend le déplacement d'un film plastique selon une direction, la découpe du film plastique selon une direction identique à celle de déplacement du film plastique et le soudage des bords de la fente ainsi réalisée.

Enfin, l'invention concerne également un dispositif pour la mise en oeuvre du procédé précité.

### Description détaillée de l'invention

L'invention sera mieux comprise ci-après au moyen d'exemples illustrés par les figures suivantes :
La figure 1 montre schématiquement un procédé selon l'invention
La figure 2 montre un exemple d'un film plastique bicouche avec une couche soudante et une couche non-soudante.
La figure 3 présente un film plastique bicouche semblable à celui de la figure 2 mais qui diffère en ce que la couche non-soudante n'est pas découpée.
La figure 4 présente une structure avec une couche alu non découpée.
La figure 5 présente une structure avec une couche alu découpée.

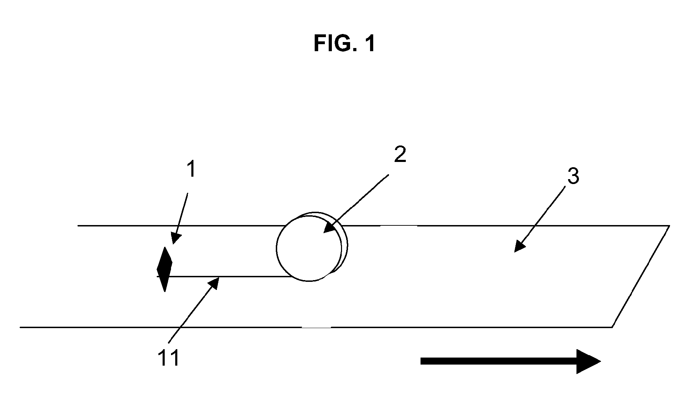

Le schéma de la figure 1 illustre le déplacement linéaire (flèche) d'un film plastique **3** qui subit d'abord une découpe , illustrée schématiquement par un outil de découpe **1**, suivie d'un soudage des bords de la fente **11** précédemment créée, le soudage étant illustré schématiquement par un dispositif de soudage **2**.

A l'issue de l'étape de soudage, le film plastique **3** peut subir une autre étape de transformation, p.ex. contre-collage ou couchage. Il peut également être façonné sur une machine de fabrication de sachet ou FFS. Cette dernière peut d'ailleurs se faire en ligne avec le procédé de découpe/soudure.

Avantageusement, le soudage peut être suivi d'une étape (non-illustrée) où l'on recouvre la soudure avec une bande adhésive.
Cette étape peut se produire selon différentes approches et/ou à divers instants, en particulier :
- sur bobineuse
- au moment de l'extrusion
- lors du complexage
- à la découpe
- au moment de la fabrication de l'emballage que ce soit sur une machine qui fabrique des sachets préformés ou sur une machine FFS qui fabrique le sachet et le remplit en ligne.
Un dispositif utilisé dans le cadre de la présente invention peut comporter une lame qui découpe le film plastique au fur est a mesure de son déplacement en continu.

Cette lame est de préférence immédiatement suivie d'un outil de soudure, idéalement rotatif pour éviter le frottement.
On peut également adapter le procédé selon l'invention dans le cas d'une traction pas à pas du film plastique.
Cette soudure peut se faire par chauffage, par contact, par air chaud, par haute fréquence, par ultrason, ou par toute autre technique disponible sur le marché.

Les procédés selon l'invention permettent en particulier la possibilité d'utiliser des films habituels du marché. Ils utilisent ensuite des étapes (découpe, soudage, etc...) largement connues et maîtrisées dans le monde industriel.
Par ailleurs, l'invention peut être déclinée de différentes manières comme l'illustrent les exemples suivants :

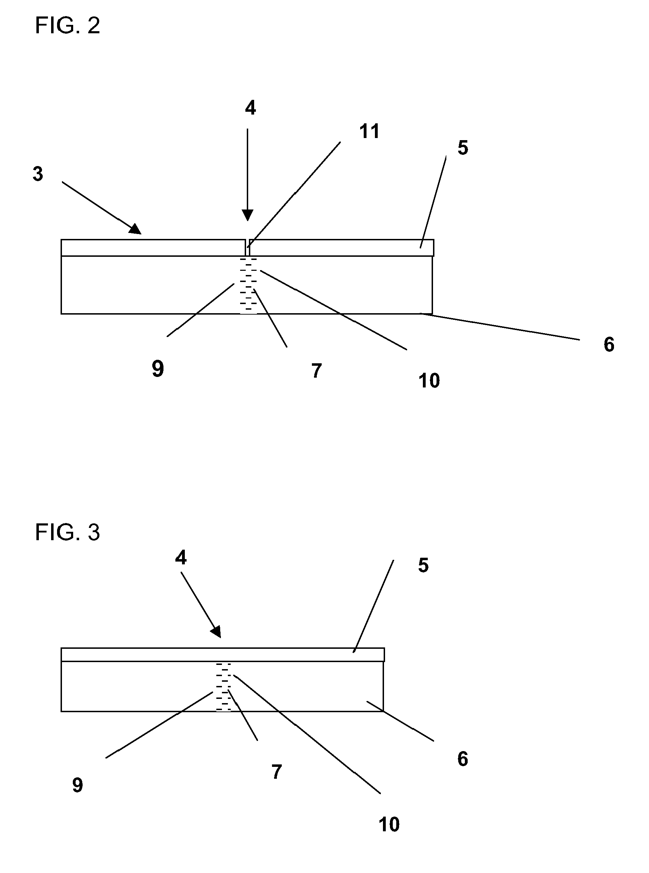

La figure 2 présente un film plastique bicouche **3** avec une couche soudante **6** et une couche non soudante **5**. Dans cet exemple, on réalise une fente **11** au travers des deux couches **5,6** mais seule la couche soudante **6** est soudée. La soudure ainsi formée **7** a donc une hauteur inférieure à celle du film plastique bicouche **3**. La zone de soudure **7** assemble une extrémité du film **9** et une deuxième extrémité **10**. La structure selon la figure **2** peut être réalisée par découpe laser.
La figure 3 illustre la même structure bicouche que la figure 2 mais qui diffère de cette dernière en ce que la couche non-soudante **5** n'a pas été préalablement découpée.
Dans ce cas, le film plastique présente une face dépourvue de fente ou de soudure, ce qui peut offrir un avantage d'ordre esthétique et mécanique.

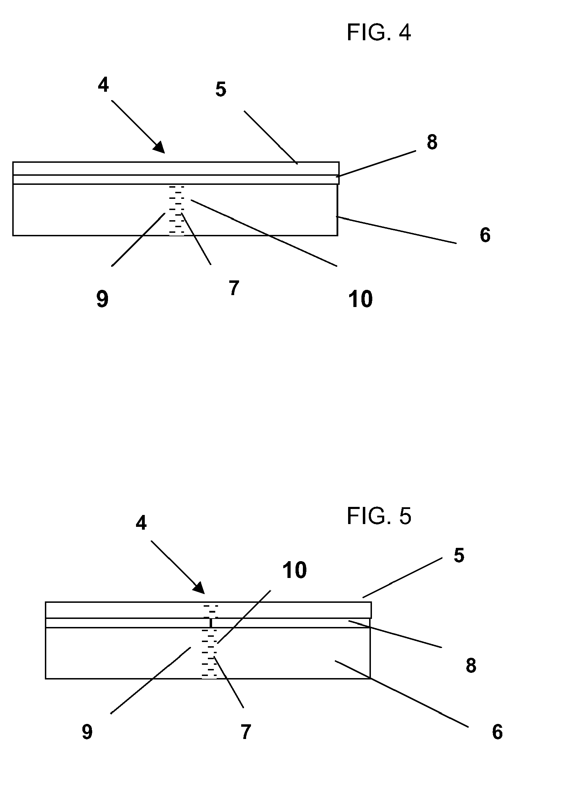

Les variantes des figures 2 et 3 peuvent chacune avoir leur intérêt. La première étant plus fragilisée que la seconde, mais peut être trop fragile pour des applications exigeantes mécaniquement. La seconde permet de conserver intactes les propriétés mécaniques de l'emballage.
De la même manière, on peut décliner toutes sortes de combinaisons avec les films habituels du marché. Si le film plastique comprend une couche d'aluminium, cette dernière ne devrait pas être découpée afin de préserver les propriétés barrière de l'aluminium. La figure 4 illustre une structure avec une couche en aluminium **8** non découpée.
La figure 5 illustre une structure avec une couche en aluminium **8** qui a néanmoins été découpée. Dans ce deuxième cas, on a privilégié la facilité de déchirure aux propriétés barrière de la couche d'aluminium **8**.

Le choix de la matière soudante, de la ou des couches à découper et l'ajustement des paramètres de soudure (pression, temps, température) permet d'ajuster la facilité de déchirure.

La déchirure orientée du film plastique peut avoir la forme souhaitée (droite ou courbe). Cette découpe peut être continue ou discontinue (pointillés) de façon à ne pas trop fragiliser l'emballage.

Cette zone peut être renforcée par une bande adhésive si besoin. L'adhésif pouvant être retiré au moment de l'utilisation de la fonction de déchirure du film plastique. Cet adhésif peut également servir à refermer l'emballage.

Comme indiqué plus haut, le film plastique selon l'invention peut être connu en soi. Il peut être :
- un PE
- un PP
- un film plastique coextrudé type PA/PE par exemple
- un film plastique couché
- un film plastique laminé type PET/PE, OPP/PE, OPA/PE, PET/alu/PE, PE/alu/PE, PP/alu/PP, PET/alu/PP ... ou toute autre composition habituelle
Les emballages utilisant un film plastique selon l'invention peuvent être utilisés dans tous les domaines qui nécessitent une zone de déchirure pré-existante.

L'invention peut en particulier être utilisée avec les emballages suivants :
- Les sachets qui tiennent debout (doypack^{™} par exemple) préformés ou fabriqués sur machine FFS.
- Les sachets plats à trois ou quatre soudures
- Les sachets avec ZIP de refermeture pour lesquels la précision de l'ouverture est importante pour la fonctionnalité d'ouverture fermeture
- Les "flowpacks", sachets à soufflets, ou tous autres emballages à base de film peuvent également être intéressés.

## Revendications

1. Film plastique (3) comprenant une zone pré-existante de déchirure orientée (4) **caractérisé par le fait que** ladite zone (4,) est constituée d'au moins une soudure (7) rendant solidaires deux parties dudit film plastique (3).

2. Film plastique (3) selon la revendication 1 constitué de plusieurs couches superposées (5,6,8).

3. Film plastique selon la revendication 1 ou 2 **caractérisé par le fait que** la soudure (7) se situe dans une région définie par la mise en contact, p.ex. par enroulement, de deux extrémités du film plastique (3).

4. Film plastique selon l'une quelconque des revendications précédentes dans lequel la soudure (7) s'étend sur toute l'épaisseur du film plastique (3).

5. Film plastique selon l'une quelconque des revendications précédentes 1 à 3 dans lequel la soudure (7) s'étend sur une hauteur inférieure à l'épaisseur du film plastique (3).

6. Film plastique selon la revendication 4 ou 5 **caractérisé par le fait que** la soudure (7) se situe dans une région du film plastique (3) définie par une fente pré-existante (11) dont l'épaisseur est inférieure à l'épaisseur du film plastique (3).

7. Procédé de fabrication d'une zone pré-existante de déchirure orientée (4) dans un film plastique (3) **caractérisé en ce que** ladite zone est obtenue par la fixation de deux parties dudit film plastique (3) au moyen d'une soudure (7).

8. Procédé selon la revendication 7 **caractérisé par** une première étape où l'on réalise une fente (11) dans le film plastique (3) suivie d'une deuxième étape lors de laquelle on referme la fente (11) par soudage.

9. Procédé selon la revendication 8 **caractérisé par le fait que** l'on réalise une fente (11) dont l'épaisseur est inférieure à l'épaisseur du film plastique (3).

10. Procédé selon l'une quelconque des revendications 7 à 9 dans lequel on dispose la soudure (7) sur seulement une partie de l'épaisseur du film plastique (3).

11. Procédé selon l'une quelconque des revendications 7 à 10 comprenant le déplacement d'un film plastique (3) selon une direction, la découpe du film plastique (3) selon la même direction suivi du soudage des bords de la fente (11) ainsi réalisée.

12. Dispositif pour la mise en oeuvre du procédé défini dans l'une quelconque des revendications 7 à 11 comprenant les éléments suivants :
- des moyens pour déplacer un film plastique (3) selon une direction;
- des moyens de découpe (1) pour réaliser une fente (11) dans le film plastique (3),
- des moyens de soudage (2) des bords de ladite fente (11),
- optionnellement, des moyens pour déposer un adhésif sur une soudure (7) réalisée dans ladite fente (11); les moyens de découpe (1), les moyens de soudage (2) et optionnellement les moyens pour déposer un adhésif étant disposés successivement l'un à la suite de l'autre, selon ladite direction.
